# EUROPÄISCHE PATENTANMELDUNG

(11) **EP 1 116 912 A2**
(43) Veröffentlichungstag der Anmeldung: **18.07.2001**
(21) Anmeldenummer: 00122514.3
(22) Anmeldetag: 14.10.2000
(51) Int. Cl.: F16N 31/00

(54) **Behälter**

(30) Priorität: 17.11.1999 DE 29920178 U; 22.11.1999 DE 29920436 U; 02.02.2000 DE 20001810 U
(71) Anmelder: Atrium Enterprises GmbH, 44309 Dortmund (DE)
(72) Erfinder: Neuwald, Horst, 44309 Dortmund (DE)
(74) Vertreter: Graf, Helmut, Dipl.-Ing.

(57) **Zusammenfassung**

Ein Behälter zum Sammeln und/oder Aufbewahren von Altöl, insbesondere Motoröl besitzt einen verschließbaren Innenraum sowie an der Behälteraußenseite eine vertiefte Aufnahme (7) zur Aufnahme einer im Behälter einstellbaren Ölansaugpumpe (8).

## Beschreibung

Die Erfindung bezieht sich auf einen Behälter gemäß Oberbegriff Patentanspruch 1.

Aufgabe der Erfindung ist es, einen Behälter zum Sammeln und Aufnehmen von Altöl, insbesondere Motoröl, geeignet ist und eine kompakte Einheit zusammen mit einer Öl-Absaugpumpe bildet.

Zur Lösung dieser Aufgabe ist ein Behälter entsprechend dem Patentanspruch 1 ausgeführt. Weiterbildungen der Erfindung sind Gegenstand der Unteransprüche. Die Erfindung wird im Folgenden anhand der Figuren an Ausführungsbeispielen näher erläutert. Es zeigen:
- Fig. 1: eine Öl-Box bzw. einen Behälter zur Aufnahme von Öl in vereinfachter perspektivischer Darstellung;
- Fig. 2: den Behälter der Fig. 1, zusammen mit einer in der Aufnahme des Behälters eingesetzten Öl-Absaugpumpe;
- Fig. 3: in einer Darstellung ähnlich Figur 2 eine weitere mögliche Ausführungsform der Erfindung;

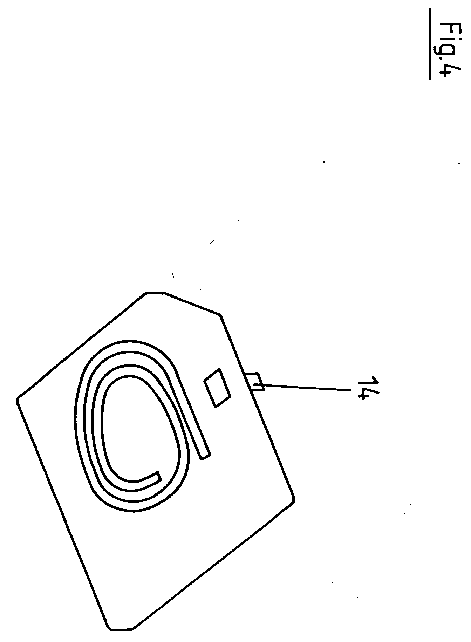

- Fig. 4: in perspektivischer Darstellung eine Draufsicht auf eine untere, abnehmbare Schale des Behälters der Figur 3.

Der in den Figuren allgemein mit 1 bezeichnete und aus Kunststoff, beispielsweise durch Blasen aus Kunststoff hergestellte Behälter dient zum Sammeln von Altöl, welches beim Ölwechsel eines Strassenfahrzeugs anfällt. Der Behälter setzt sich im wesentlichen aus drei Behälterabschnitten zusammen, nämlich aus zwei seitlichen Behälterabschnitten 2 und 3, die parallel zueinander und im Abstand voneinander vorgesehen sind, sowie aus einem unteren Behälterabschnitt 4, der quer zu den Abschnitten 2 und 3 liegt und zusammen mit diesem im wesentlichen U-förmige Behälterformen bildet.

Die Abschnitte 2, 3 und 4 bzw. deren Innenräume stehen miteinander in Verbindung und bilden den geschlossenen Behälterinnenraum an einem der beiden seitlichen Behälterabschnitte, nämlich am Behälterabschnitt 2 ist an der Oberseite des Behälters eine Behälteröffnung gebildet, die durch einen aufschraubbaren Deckel 5 dicht verschließbar ist. An der Oberseite sind die beiden Abschnitte 2 und 3 etwa in der Mitte durch einen als Hohlsteg ausgebildeten oder rohrartigen Griff 6, der senkrecht zu den Abschnitten 2 und 3 sich zwischen diesen erstreckt, miteinander verbunden. Der Innenraum des Griffes 6 ist nach außen hin dicht abgeschlossen und mündet beidendig in den Innenraum eines Abschnittes 2 bzw. 3. Der Griff 6 dient einerseits zum Tragen des Behälters 1, bewirkt andererseits aber auch eine Verstärkung des Behälters zwischen den oberen Bereichen der Abschnitte 2 und 3.

Der im wesentlichen von den Abschnitten 2, 3 und 4 gebildete Behälterinnenraum besitzt ein ausreichend großes Volumen, so daß die normalerweise bei einem Ölwechsel anfallende Menge an Altöl, beispielsweise bis sechs Liter, ohne weiteres von dem Behälter 1 aufgenommen werden kann.

Zwischen den einander zugewandten Seiten der Abschnitte 2 und 3 und oberhalb des Abschnittes 4 sowie unterhalb des Griffes 6 ist eine Aufnahme 7 gebildet, in die eine elektrisch betriebene Pumpe 8 eingestellt werden kann, über die das verbrauchte Motoröl für den Ölwechsel abgesaugt werden kann. Die Pumpe 8 ist beispielsweise mit einem geeigneten Stecker an einen Zigarettenanzünder des Fahrzeugs anschließbar und besitzt zwei Schläuche, und zwar einen Schlauch 9, über den das verbrauchte Motoröl ansaugbar ist und an dem ein sondenartiges Rohrstück 10 vorgesehen ist, welches anstelle des Öl-Teilstabes in den betreffenden Motor einführbar ist. Die Pumpe 8 besitzt weiterhin einen Schlauch 11, der nach dem Abschrauben des Behälterdeckels 5 in den Behälter 1 einführbar ist und über den somit das von der Pumpe 8 angesaugte alte Motoröl in den Behälter 1 gelangt.

Zur Unterbringung der Schläuche 9 und 11 sowie der Sonde 10 sind die beiden Behälterabschnitte 2 und 3 an einer offenen Seite der Aufnahme 7, d.h. an der dem Deckel 5 entfernt liegenden Seite an ihren einander zugewandten Flächen jeweils mit einer an der Oberseite des Behälters ebenfalls offenen Vertiefung 12 versehen, und zwar zur Halterung der aufgewickelten Schläuche 9 und 11 im Nichtgebrauchszustand der Pumpe 8, und zwar in der Weise, daß jede Windung des aufgewickelten Schlauches 9 bzw. 11 von beiden Vertiefungen 12 aufgenommen ist.

Bei der dargestellten Ausführungsform besitzt der Behälter 1 eine im wesentlichen quaderförmige Außenkontur. Der Behälter 1 ist weiterhin so ausgebildet, daß die in die Aufnahme 7 eingesetzte Pumpe vollständig innerhalb dieser Außenkontur aufgenommen ist, d.h. nicht über den Behälter 1 nach außen vorsteht.

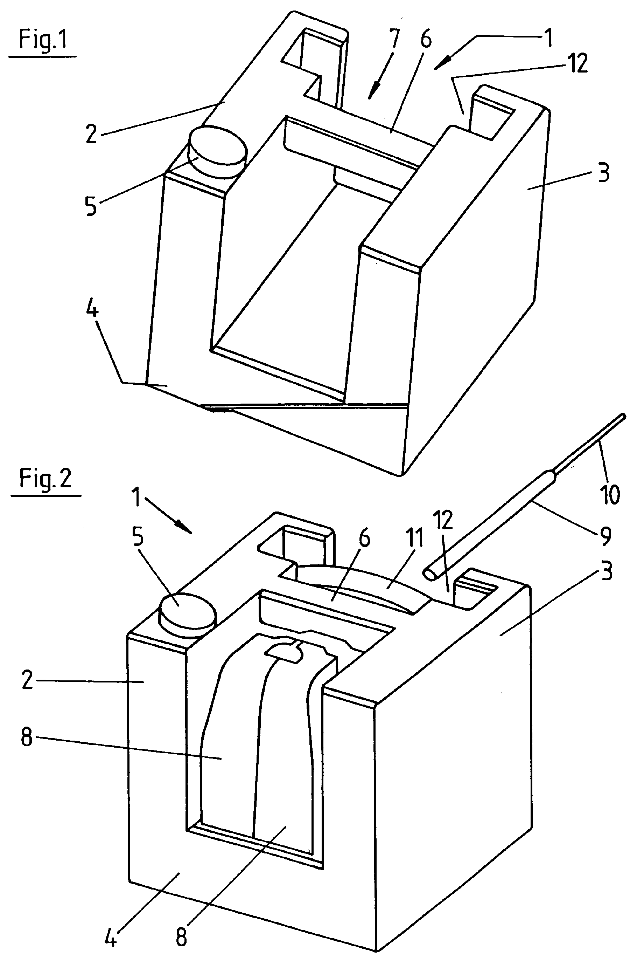

An der Behälterunterseite ist beispielsweise eine in den Figuren 1 und 2 nicht gezeigte, durch einen Verschluß, z.B. durch eine Veschlußschraube mit Dichtung, dicht verschließbare Ölablaßöffnung vorgesehen.

Der in den Figuren 1 und 2 dargestellte Behälter 1 läßt sich hinsichtlich seiner Formgebung grob damit beschreiben, daß der im wesentlichen würfelförmige Behälter in der Mitte mit einer die Aufnahme 7 bildenden, zur Oberseite sowie zu zwei parallelen Umfangsseiten hin offenen muldenförmigen Vertiefung versehen ist, die mit ihrer senkrecht zum Boden der Vertiefung liegenden Mittelebene parallel zu zwei Umfangsseiten des Behälters 1 angeordnet ist.

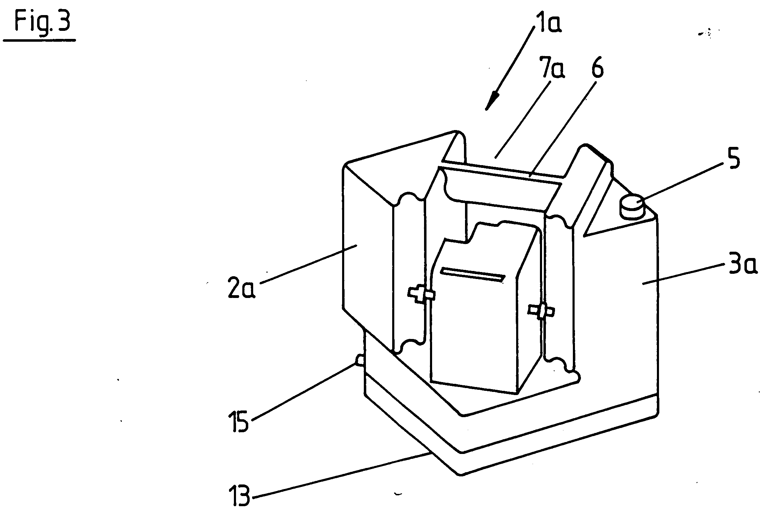

Die Figur 3 zeigt als weitere mögliche Ausführungsform einen Behälter 1a, dessen Form sich grob damit beschreiben läßt, daß der wiederum würfelförmige Behälter 1a mit einer die Aufnahme 7a für die Pumpe 8 bildenden muldenförmigen Vertiefung versehen ist, die mit ihrer senkrecht zum Boden der Vertiefung angeordneten und den Griff 6 senkrecht schneidenden Mittelebene diagonal zu der quadratischen Behälterunterseite liegt und somit zur Behälteroberseite sowie auch zu zwei diagonal gegenüberliegenden Ecken des Umfangs des Behälters hin offen ist. Zur Aufnhame des Schlauches 11 ist bei dieser Ausführung an der Unterseite des Behälters 1a eine Schale 13 vorgesehen, die mit Hilfe von Rasten 14 durch Einrasten an der Unterseite des Behälters 1a lösbar befestigt ist.

Der Behälter 1a besitzt einen oberen Behälerverschluß 5 und einen unteren Behälterverschluß 15. Durch die diagonale Anordnung der Aufnahme 7a können die Abmessungen des Behälters 1a bei vorgegebenen Abmessungen der Pumpe 8 möglichst klein gehalten werden. Durch die diagonale Anordnung der Aufnahme 7a ergeben sich bei dem Behälter 1a den Behälterabschnitt 2 und 3 entsprechende Behälterabschnitte 2a und 3a, die wiederum mit dem unteren Behälterabschnitt 4 miteinander in Verbindung stehen und den geschlossenen Behälterinnenraum bilden, die aber in Draufsicht auf den Behälter 3 eckförmig ausgeführt sind.

Die Pumpe 8 ist beispielsweise durch Magnet-Halter in der Aufnahme 7a gesichert. Dieser Magnet-Halter bestehen aus wenigstens einem Permanentmagneten an der Unterseite der Pumpe und aus wenigstens einer am Boden der Aufnahme 7a vorgesehenen Platte aus einem ferromagnetischen Material, beispielsweise aus Eisen oder Stahl.

### Bezugszeichenliste

- 1, 1a: Behälter
- 2, 3, 4: Behälterabschnitt
- 2a, 3a: Behälterabschnitt
- 5: Behälterverschluss bzw. Deckel
- 6: Griff
- 7, 7a: Aufnahme
- 8: Pumpe
- 9: Schlauch
- 10: Rohrstück
- 11: Schlauch
- 12: Vertiefung
- 13: Schale
- 14: Rastelement
- 15: unterer Behälterverschluß

## Patentansprüche

1. Behälter mit einem verschließbaren Innenraum zum Sammeln und/oder Aufbewahren von Altöl, insbesondere Motoröl, **dadurch gekennzeichnet**, daß der Behälter an der Behälteraußenseite eine vertiefte Aufnahme (7, 7a) zur Aufnahme einer im Behälter einstellbaren ÖI-Ansaugpumpe (8) aufweist.

2. Behälter nach Anspruch 1, dadurch gekennzeichnet, daß die Aufnahme (7, 7a) zwischen zwei seitlichen Behälterabschnitten (2, 3, 2a, 3a) und einem unteren, quer zu diesen verlaufenden Behälterabschnitt (4) gebildet ist, wobei beispielsweise die beiden seitlichen Behälterabschnitte (2, 3) parallel zueinander und im Abstand voneinander vorgesehen sind.

3. Behälter nach Anspruch 1 oder 2, dadurch gekennzeichnet, daß die seitlichen Behälterabschnitte (2, 3, 2a, 3a) an der Oberseite des Behälters durch wenigstens ein Querstück (6), beispielsweise durch wenigstens ein als Griff (6) dienendes Querstück miteinander verbunden sind.

4. Behälter nach einem der vorhergehenden Ansprüche, dadurch gekennzeichnet, daß er einstückig aus Kunststoff, vorzugsweise durch Blasen hergestellt ist, und/oder daß er eine im wesentlichen quaderförmige oder würfelförmige Außenkontur aufweist.

5. Behälter nach einem der vorhergehenden Ansprüche, gekennzeichnet durch Aufnahmen (12) zum Sichern von Schläuchen (9, 10, 11) der Pumpe (8).

6. Behälter nach einem der vorhergehenden Ansprüche, dadurch gekennzeichnet, daß die Pumpe (8) vollständig in der lichten Außenkontur des Behälters (1, 1a) aufgenommen ist, und/oder daß an der Behälterunterseite eine dicht verschließbare Ölablaßöffnung (15) vorgesehen ist.

7. Behälter nach einem der vorhergehen Ansprüche, dadurch gekennzeichnet, daß die Aufnahme (7, 7a) zur Behälteroberseite sowie am Behälterumfang offen ist, wobei beispielsweise die Aufnahme (7, 7a) an zwei einander gegenüberliegenden Seiten des Behälterumfangs offen ist.

8. Behälter nach einem der vorhergehenden Ansprüche, dadurch gekennzeichnet, daß die Aufnahme (7) mit ihrer die offenen Seiten der Aufnahme einschließender Mittelebene parallel zu zwei Umfangsseiten das eine quadratische oder quaderförmige Außenkontur aufweisenden Behälters (1) liegt.

9. Behälter nach einem der vorhergehenden Ansprüche, dadurch gekennzeichnet, daß die die Öffnungen der Aufnahme (7a) einschließende Mittelebene dieser Aufnahme diagonal zu der Unterseite des einen quaderförmige oder würfelförmige Außenkontur aufweisenden Behälters liegt.

10. Behälter-Pumpenkombination, gekennzeichnet durch einen Behälter und eine Pumpe nach einem der vorhergehenden Ansprüche.
